# EUROPEAN PATENT SPECIFICATION

(11) **EP 1 096 006 B1**
(45) Date of publication and mention of the grant of the patent: **06.05.2004**
(21) Application number: 00830708.4
(22) Date of filing: 26.10.2000
(51) Int. Cl.: C12G 1/02

(54) **Method of solidifying concentrated, rectified must and sugar-solutions**
Verfahren zum Verfestigen konzentriertem, rektifiertem Most und Zucker-Lösungen
Méthode de solidification de moût ou jus de sucre concentré et redressé

(30) Priority: 27.10.1999 IT RM990662
(43) Date of publication of application: 02.05.2001
(73) Proprietor: Pirrone, Luigi, 90127 Palermo (IT)
(72) Inventor: Pirrone, Luigi, 90127 Palermo (IT)
(74) Representative: Sarpi, Maurizio

(56) References cited:
- EP-A- 0 357 501
- WO-A-91/00026
- ES-A- 2 010 947
- GB-A- 1 492 992
- DATABASE WPI Section Ch, Week 200022 Derwent Publications Ltd., London, GB; Class D16, AN 2000-254990 XP002162065 & RU 2 125 591 C (MARGVELASHVILI B I), 27 January 1999 (1999-01-27)
- DATABASE WPI Section Ch, Week 199222 Derwent Publications Ltd., London, GB; Class A97, AN 1992-181473 XP002162066 & SU 1 668 384 A (YALOVENY TECHN CONS ASSOC), 7 August 1991 (1991-08-07)
- USSEGLIO-TOMASSET L ET AL: "Observations on nitrogenous constituents in colloids of musts and wines, and colloids formed by wine yeasts." RIVISTA DI VITICOLTURA E DI ENOLOGIA 1977 SEZIONE DI CHIMICA ENOLOGICA, ISTITUTO SPERIMENTALE PER L'ENOLOGIA, ASTI, ITALY, vol. 30, no. 11, pages 452-469, XP000982754

## Description

The present invention relates to a method of solidifying, in particular concentrated, rectified must, and generally, transformation product of vegetable origin and their derivatives.

As known, the concentrated, rectified must (CRM) is a product obtained from grape must subjected to rectification by ion exchange resins, then to concentration in multistage evaporators.

The product thus obtained is in the thick liquid state at the room temperature, has a white transparent colour, is limpid and rather purified, and consists of a water solution essentially containing glucose and fructose with a concentration of about 68%-wt and lesser components, the limit parameters of which are stated by law by CEE regulations No. 8822/87 and No. 2253/98.

CRM is used in the techniques for enriching white and red grape musts produced in areas where the pedologic climatic conditions do not allow the desired sugar-content to be reached, and finds wide application in ecology, sweetening, preparation of sparkling wines, sparkling industry, food industry, confectionery and bakery products.

The CRM produced in factory is delivered to users by tank trucks, road-transported reservoirs and containers according to destination, with loads reaching, for example, also about 30 tons, and the loading and unloading is carried out by means of suitable pumps.

As produced in the liquid state, CRM has a lot of problems during storage, transportation and use, which are factors limiting a wider expansion to the addressed users with the consequence of a falling off demand.

For example, upon storing CRM in suitable silos of stainless steel as well as upon producing and using it, one main problem of the product is its liability to spontaneous crystallization, even though in reduced scale, because of a lowering in the temperature due to weather changeability, with the consequence of a reduction in the sugar concentration causing difficulties of foreseeing the consumption.

It is not a chance that the concentration of glucose and fructose in the final product hardly ever exceeds 68-70%-wt. in order to overcome the above-mentioned problem.

Furthermore, upon production, transportation and use the product in the liquid state should necessarily be stored in suitable silos with a variable size and transported by the aid of pumps, pipings and everything else for providing an equipment which the user not always has available due to service cost.

A first object of the present invention is to solidify the concentrated, rectified must in order to obtain a solidified product, even of the pasty type, that does not cause the above-mentioned problems and any other problem of the present state of art. Particularly, one object of the invention is the set-up of a method of producing solidified CRM that allows a number of advantages to be achieved such as rational storage, easy transportation and simple use due to its packing method and utilization.

The above-mentioned object is achieved by the present invention relating to a method of solidifying concentrated, rectified must (CRM) including the step of solidifying the components of CRM such as glucose and fructose and other lesser components of CRM so that a solidified product separated from the not solidified components is obtained.

For a better understanding of the invention, a not limiting description of an embodiment thereof is given herebelow.

According to the invention the solidification step is accomplished by treating CRM with ethyl alcohol having such a suitable concentration as to cause glucose, fructose and lesser components of the starting CRM to solidify.

In the State of the Art (i.e. W0910026; ES-A-2010947 and RU2125591) processes wherein ethanol is added to must (grape juice) to increase its preservation are known.

The present invention relates, instead, to a method for obtaining solidified CRM in a crystalline form characterised by the use of ethyl alcohol with a suitable concentration.

It should be understood, however, that the above-mentioned step of solidifying CRM can be accomplished by treating the CRM with ethyl alcohol having a suitable concentration also in combination or after treatment with one or more hydrophilic agents and by using all of the systems and processes known in itself that can allow CRM to be solidified.

It is self-evident, furthermore, that the above-mentioned step of solidifying CRM can be accomplished with or without insemination and with simultaneous or following separation of the solidified product from the not solidified components as well as with simultaneous or following purification of the obtained product by using different suitable systems up to a purity and dehydration degree which is a function of the type of the desired product.

Finally, it should be understood that the applications of the invention can be extended to the solidification of all of the sugar-solutions, also not concentrated solutions deriving from processes of transformation and rectification of raw materials of vegetable origin and their derivatives.

The method of the invention is described in the exemplificative embodiment given by way of a not limiting example in which further details are mentioned to explain thoroughly the present invention.

### EXAMPLE

An amount of concentrated, rectified must with a sugar-concentration of about 68%-wt. is treated with absolute ethyl alcohol in the ratio of 2:1 in a suitable container to be connected to a rotating evaporator; the solution is stirred gently and quickly and is concentrated by means of the rotating evaporator at room temperature and reduced pressure until the solution reaches the maximum concentration. Meanwhile the evaporated product is delivered to other uses.

Upon slow stirring, the solution thus obtained is treated with the same amount of absolute ethyl alcohol as that used in the preceding treatment and then the solution is quickly concentrated again until the solution reaches its maximum density.

Meanwhile the evaporated product is delivered to other uses.

The solution thus obtained is quickly treated with the same amount of absolute ethyl alcohol as that used for the preceding treatment and is quickly stirred for a few seconds to provide a solidified product that is slowly separated from the liquid.

It should be appreciated that the not limiting example aiming at demonstrating the validity of the invention described above excludes the economically convenient values of the theoretical process parameters of maximum efficiency such as temperature, vacuum, concentration of CRM and ethyl alcohol that can be used up to its maximum concentration also in the anhydrous and/or pure form, and the number of treatments of CRM which is concentrated from time to time with ethyl alcohol, whereas the CRM solidification process by means of the treatment with ethyl alcohol having a suitable concentration is accomplished by a continuous process deriving from known technologies that can be used to such purposes. The following steps are executed: a centrifugation step for the separation of the solidified product from the liquid solution intended to be used elsewhere and, if necessary, a purification step by washing with suitable liquids, e.g. water, by using the washing solutions for other purposes, and finally an evaporation step of the residual liquid impregnating the solidified CRM to be delivered to other users. Thus, a solidified product is obtained with a more or less high drying degree according to the different types of the desired solidified CRM to be subjected, if necessary, also to suitable treatments to provide the desired granulometry to the finished product.

## Claims

1. A method of solidifying concentrated rectified must CRM, including its pasty form, **characterized in that** the solidification step is accomplished by treating the concentrated, rectified must in the liquid and/or atomized state with ethyl alcohol used alone or in combination with one or more hydrophilic agents or hydrophilic means, at a such concentration ratio as to cause the components capable of being solidified and belonging to the starting concentrated, rectified must to be solidified.

2. The method of claim 1, **characterized in that** the solidified product is simultaneously or successively separated from the not solidified components, and the obtained solidified concentrated rectified must (solidified CRM) is simultaneously or successively purified and dried, and subjected to further suitable treatments in order to provide the desired granulometry to the finished product.

3. The method of claims 1 and 2, **characterized in that** the concentrated rectified must (CRM) to be solidified has a concentration of glucose and fructose of 68-70% of the total weight.

4. The method of claims 1 to 3, **characterized in that** the ethyl alcohol is used with a suitable concentration.

5. The method of claims 1 to 4, **characterized in that** the ethyl alcohol in a suitable concentration to be used is in the anhydrous or pure form.

6. The method of claims 1 to 5, **characterized in that** the solution from the step of separation of the solidified product is used in other steps of the process.

7. The method of claims 1 to 6, **characterized in that** the solution from purification and drying steps is used in other steps of the process.

8. The method of claims 1 to 7, **characterized in that** the following steps are provided:
- adding absolute ethyl alcohol to an amount of concentrated rectified must (CRM) in order to obtain a ratio of 2:1 (v/v);
- concentrating the solution by evaporation at room temperature and suitable reduced pressure until the solution reaches the maximum concentration, and conveying the evaporated product to other steps;
- treating the solution thus obtained with the same amount of absolute ethyl alcohol as that used for the preceding step, and repeating the concentrating step until the solution reaches the maximum density, and conveying the evaporated product to other steps;
- treating the solution thus obtained with the same amount of absolute ethyl alcohol as that used for the preceding step, and stirring quickly the solution until a solidified product which slowly separates from the liquid is obtained.

9. The method of the preceding claim, **characterized in that** there is provided the further step of centrifugation for separating the solidified product from the liquid solution intended to be used for other purposes.

10. The method of claims 8 and 9, **characterized in that** there is provided the further step of purification by washing with suitable liquids and the step of evaporating the residual liquid impregnating the solidified CRM to be delivered to other users.

## Patentansprüche

1. Verfahren zum Verfestigen von konzentriertem, rektifiziertem Most (KRM) sowie seiner weichen Form, **dadurch gekennzeichnet, daß** der Verfestigungsschritt unter Behandlung des konzentrierten, rektifizierten Mostes in seinem flüssigen und/oder zerstäubten Zustand durch reinen oder in Verbindung mit einem oder mehreren hydrophilen Mitteln verwendeten Äthylalkohol bei einem Konzentrationsverhältnis, das die Verfestigung der härtbaren, in dem konzentrierten, rektifizierten Ausgangsmost enthaltenen Bestandteilen verursacht, durchgeführt wird.

2. Verfahren nach Anspruch 1, **dadurch gekennzeichnet, daß** das verfestigte Produkt von den nicht verfestigten Bestandteilen gleichzeitig oder nachher getrennt wird und der gewonnene, verfestigte, konzentrierte, rektifizierte Most (verfestigter KRM) gleichzeitig oder nachher gereinigt, getrocknet und weiteren Behandlungen unterworfen wird, die geeignet sind, die gewünschte Körnung dem gefertigten Produkt zu erteilen.

3. Verfahren nach Anspruch 1 und 2, **dadurch gekennzeichnet, daß** der konzentrierte, rektifizierte zu verfestigende Most (KRM) eine Konzentration an Glukose und Fruktose von 68-70% des Gesamtgewichtes hat.

4. Verfahren nach Anspruch 1 bis 3, **dadurch gekennzeichnet, daß** Äthylalkohol mit einer geeigneten Konzentration verwendet wird.

5. Verfahren nach Anspruch 1 bis 4, **dadurch gekennzeichnet, daß** der mit einer geeigneten Konzentration zu verwendende Äthylalkohol ist seine wasserfreie oder reine Form.

6. Verfahren nach Anspruch 1 bis 5, **dadurch gekennzeichnet, daß** die Lösung von dem Abtrennungsschritt des verfestigten Produkts in anderen Schritten des Verfahrens verwendet wird.

7. Verfahren nach Anspruch 1 bis 6, **dadurch gekennzeichnet, daß** die Lösung von den Reinigungs- und Trocknungsschritten in anderen Schritten des Verfahrens verwendet wird.

8. Verfahren nach Anspruch 1 bis 7, **dadurch gekennzeichnet, daß** die folgenden Schritte vorgesehen sind:
- Zugabe von reinem Äthylalkohol zu einer Menge an konzentriertem, rektifiziertem Most (KRM), so daß ein Verhältnis von 2:1 (v/v) erhalten wird;
- Konzentrierung der Lösung durch Verdunstung bei Umgebungstemperatur und geeignetem verringertem Druck, solange die Lösung die höchste Konzentration erreicht, sowie Förderung des verdunsteten Produkts zu anderen Schritten;
- Behandlung der gewonnenen Lösung mit der gleichen Menge an reinem Äthylalkohol, wie in dem vorangehenden Schritt verwendet wird, sowie Wiederholung des Konzentrierungsschrittes, solange die Lösung die höchste Dichte erreicht, und Förderung des verdunsteten Produkts zu anderen Schritten;
- Behandlung der gewonnenen Lösung mit der gleichen Menge an reinem Äthylalkohol, wie in dem vorangehenden Schritt verwendet wird, sowie schnelle Rührung der Lösung, solange ein verfestigtes Produkt, das von der Flüssigkeit langsam ausscheidet, erhalten wird.

9. Verfahren nach dem vorhergehendem Anspruch, **dadurch gekennzeichnet, daß** der weitere Schleuderschritt zur Abtrennung des verfestigten Produkts von der flüssigen, für andere Zwecke zu verwendenden Lösung vorgesehen ist.

10. Verfahren nach Anspruch 1 und 9, **dadurch gekennzeichnet, daß** der weitere Reinigungsschritt durch Waschen mit geeigneten Flüssigkeiten sowie der Schritt der Verdunstung der Restflüssigkeit, die den verfestigten, andere Verbraucher zu versorgenden KRM imprägniert, vorgesehen sind.

## Revendications

1. Méthode de solidification de moût redressé concentré (CRM), en comprenant sa forme pâteuse, **caractérisée en ce que** la phase de solidification est réalisée en traitant le moût redressé concentré à l'état liquide et/ou atomisé avec alcool éthylique employé seul ou en combinaison avec un ou plusieurs agents hydrophiliques ou moyens hidrophiliques, à un rapport de concentration tel à causer la solidification des composants capables d'être solidifiés et appartenant au moût redressé, concentré de départ à être solidifié.

2. Méthode de la Revendication 1, **caracterisée en ce que** le produit solidifié est séparé simultanément ou par la suite des composants non solidifiés, et le moût redressé concentré solidifié obtenu (CRM solidifié) est purifié et séché simultanément ou par la suite, et soumis à traitements ultérieures dans le but de fournir la granulométrie désirée au produit fini.

3. Méthode des Revendications 1 et 2, **caracterisée en ce que** le moût redressé concentré (CRM) à être solidifié a une concentration de glucose e fructose de 68% à 70% du poids total.

4. Méthode des Revendications 1 à 3, **caracterisée en ce que** l'alcool éthylique est employé à une concentration appropriée.

5. Méthode des Revendications 1 à 4, **caracterisée en ce que** l'alcool éthylique à une concentration appropriée à être employé est en sa forme anhydre ou pure.

6. Méthode des Revendications 1 à 5, **caracterisée en ce que** la solution par la phase de séparation du produit solidifié est employé en autres phases du procès.

7. Méthode des Révendications 1 à 6, **caracterisée en ce que** la solution par les phases de purification et séchage est employée en autres phases du procès.

8. Méthode desRevendications 1 à 7, **caracterisée en ce que** les phases suivantes sont prévues:
- ajouter alcool éthylique absolu dans une quantité de moût redressé concentré (CRM) dans le but d'obtenir un rapport de 2:1 (v/v);
- concentrer la solution par évaporation à température ambiante et pression opportunément réduite jusqu'au moment où la solution arrive à sa concentration maximale, et transporter le produit évaporé à d'autres phases;
- traiter la solution ainsi obtenue avec la même quantité d'alcool éthylique absolu employée pour la phase précédente, et répéter la phase de concentration jusqu'au moment où la solution arrive à sa densité maximale, et transporter le produit évaporé à d'autres phases;
- traiter la solution ainsi obtenue avec la même quantité d'alcool éthylique absolu employée pour la phase précédente, et agiter rapidement la solution jusqu'au moment où l'on obtient un produit solidifié qui se sépare lentement du liquide.

9. Méthode de la Revendication précédente, **caracterisée en ce que** l'on prévoit la phase ultérieure de centrifugation pour séparer le produit solidifié de la solution de liquide à être employée pour d'autres buts.

10. Méthode des Revendications 8 et 9, **caracterisée en ce que** l'on prévoit la phase ultérieure de purification par lavage avec des liquides appropriés et la phase d'évaporation du liquide restant imprégnant le CRM solidifié à être débité à d'autres usagers.
